(19) **Europäisches Patentamt** / **European Patent Office** / **Office européen des brevets**

(11) **EP 2 479 748 B1**

(12) **EUROPEAN PATENT SPECIFICATION**

(45) Date of publication and mention of the grant of the patent:
**16.05.2018 Bulletin 2018/20**

(21) Application number: **10840413.8**

(22) Date of filing: **09.09.2010**

(51) Int Cl.:
*G10L 25/48* (2013.01)    *H04M 3/22* (2006.01)

(86) International application number:
**PCT/CN2010/076778**

(87) International publication number:
**WO 2011/079624 (07.07.2011 Gazette 2011/27)**

(54) **METHOD AND DEVICE FOR IDENTIFYING MARKER SOUND**

VERFAHREN UND VORRICHTUNG ZUR IDENTIFIZIERUNG EINES MARKIERUNGSTONS

PROCÉDÉ ET DISPOSITIF D'IDENTIFICATION D'UN SON DE MARQUEUR

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.12.2009 CN 200910262771**

(43) Date of publication of application:
**25.07.2012 Bulletin 2012/30**

(73) Proprietor: **ZTE Corporation**
**Shenzhen, Guangdong 518057 (CN)**

(72) Inventors:
• **HAN, Zhi**
  **Guangdong 518057 (CN)**
• **LU, Shangyi**
  **Guangdong 518057 (CN)**
• **ZHU, Zhenming**
  **Guangdong 518057 (CN)**

(74) Representative: **Krauns, Christian**
**Wallinger Ricker Schlotter Tostmann**
**Patent- und Rechtsanwälte Partnerschaft mbB**
**Zweibrückenstraße 5-7**
**80331 München (DE)**

(56) References cited:
**EP-A1- 1 667 106**    **EP-A2- 0 644 674**
**WO-A1-2006/042943**    **CN-A- 1 354 455**
**CN-A- 1 604 188**    **CN-Y- 2 781 513**
**JP-A- 1 025 198**    **US-A- 5 905 971**
**US-A1- 2003 231 775**

• **RIBBROCK A ET AL: "A full-text retrieval approach to content-based audio identification", PROCEEDINGS OF THE 2003 IEEE RADAR CONFERENCE. HUNTSVILLE, AL, MAY 5 - 8, 2003; [IEEE RADAR CONFERENCE], NEW YORK, NY : IEEE, US, 9 December 2002 (2002-12-09), pages 194-197, XP010642545, ISBN: 978-0-7803-7920-6**

EP 2 479 748 B1

## Description

### Technical Field

The present invention relates to a speech quality testing technology in the wireless/wired communication field, and particularly to a method and an apparatus for identifying marker sound.

### Background of the Related Art

The speech quality testing in a wireless/wired network is implemented by comparing a source sound sample sent by a sender with an attenuation sample received by a receiver. In order to estimate the speech quality of the network objectively, an accurate alignment of a source sample and a collected attenuation sample is needed. In general, before sending a formal source sound sample, a sender will send a speech data segment with obvious characteristic as a marker sound, and will send source speech sample data after a period of time agreed by a sender and a receiver jointly. The receiver identifies the marker sound and then waits for a corresponding period of time, then starts to record the attenuation sample. So that the alignment of the source sample and the attenuation sample is implemented.

During a process of practical testing, the sender generally adopts a mono-tone signal with a special frequency as the marker sound. The receiver, after receiving speech data, by performing Fast Fourier Transform (FFT) on the data and filtering the data, judges whether the received speech data is the marker sound. In a simple communication environment, a receiver can filter most of external interferences by the FFT and filter operations. In practical environment, however, there are various interferences and noise because of complex and changeable network environment. During the process of testing, once the noise with the same frequency as the mono-tone signal is introduced, the noise can not be filtered out, and the receiver will certainly misjudge the marker sound, causing an abnormal testing result.

Further, the frequency adopted by the mono-tone signal is generally above an audible frequency range of human ear, so a tester can not feel subjectively. When a sample alignment error occurs, the tester can not examine the reason of the occurrence of the error by manual means. Even though the frequency adopted by the mono-tone signal is within the audible range of human ear, the sound of the mono-tone signal is a shrill squealing sound, which will seriously affect hearing feeling of a tester.

The document EP0644674A2 discloses a speech transmission link, this leads from a telephone of a private network via exchanges to a mobile node with an antenna and via a radio link to a mobile telephone. A mobile and a stationary measuring unit which are disposed near to the telephones are used to evaluate the given transmission quality. The one measuring unit transmits a pre-defined sequence of human speech, prefixed by a synchronisation pattern, as a test signal. The respective other measuring unit recognizes the synchronisation pattern and thereby defines the starting time of the following sequence. This sequence is divided up into a multiplicity of respective intermediate values in that time intervals are formed and their sound characteristics are digitised. All of the intermediate values are finally evaluated by a neural network in such a way that an evaluation of "quality good, average or poor" understandable to humans is achieved at the output of said network. It is important here that the neural network is first trained using data evaluated by test persons.

The document "RIBBROCK A ET AL: A full-text retrieval approach to content-based audio identification, PROCEEDINGS OF THE 2003 IEEE RADAR CONFERENCE. HUNTSVILLE, AL, 9 December 2002 (2002-12-09), pages 194-197" discloses a full-text retrieval approach to content-based audio identification.

### Summary of the Invention

The technical problem to be solved in the present invention is to provide a method and an apparatus for identifying a marker sound, so as to avoid a misjudgment of the marker sound.

In order to solve the above problem, a method for identifying marker sound is disclosed by the present invention, comprising:

recording a speech data segment from an attenuation sample, wherein the number of sampling points of the speech data segment is equal to the number of sampling points of the marker sound sample, and extracting envelope characteristic sampling points from all sampling points of the speech data segment;

if it is determined that, according to the extracted envelope characteristic sampling points, a spacing of neighboring envelope characteristic sampling points in the speech data segment is equal to a spacing of corresponding neighboring envelope characteristic sampling points of a marker sound in a source sound sample, determining that the speech data segment is the marker sound;

wherein, the envelope characteristic sampling points comprise peak sampling points and trough sampling points on the envelope, the neighboring envelope characteristic sampling points are neighboring peak sampling points on the envelope, or neighboring trough sampling points on the envelope, or neighboring peak sampling point and trough sampling point on the envelope.

The above method further comprising:

when the speech data segment has any one of the following envelope shape characteristics, determining that a spacing of neighboring envelope characteristic sampling points in the speech data segment is equal to a spacing of corresponding neighboring envelope characteristic sampling points of the marker sound in the source sound sample;

according to an envelope shape characteristic 1, the spacing of two neighboring peak sampling points on the envelope of the speech data segment is equal to the spacing of two neighboring peak sampling points on the envelope of the marker sound in the source sound sample; or, the spacing of two neighboring trough sampling points on the envelope of the speech data segment is equal to the spacing of the two neighboring trough sampling points on the envelope of the marker sound in the source sound sample;

according to an envelope shape characteristic 2, a ratio, of a tangent value of the angle between the line connecting a corresponding peak sampling point on the envelope of the marker sound of the source sound sample to the coordinate point on axis x of its neighbor trough sampling point and axis x, to the tangent value of the angle between the line connecting the peak sampling point on the envelope of the speech data segment to the coordinate point on axis x of its neighbor trough sampling point and axis x, is a first ratio, and the ratio of the amplitude of the corresponding peak sampling point of the envelope of the marker sound in the source sound sample to the amplitude of the peak sampling point on the envelope of the speech data segment is a second ratio, wherein the first ratio and the second ratio are equal.

The above method further comprises:

calculating with the peak sampling points and the trough sampling points extracted from the speech data segment according to the following formula, when the calculation result of function $S(D_{DXi}, D_{OXi})$ is 1, determining that the speech data segment has the envelope shape characteristic 1:

$$S(D_{DXi}, D_{OXi}) = \begin{cases} 1 & if \left( \dfrac{|D_{DXi} - D_{OXi}|}{D_{OXi}} \leq a \right) \\ \\ 0 & etc \end{cases}$$

wherein, $D_{DXi}$ represents a spacing between two neighboring peak sampling points or two neighboring trough sampling points on the envelope extracted from the speech data segment;
$D_{OXi}$ represents a spacing between two neighboring peak sampling points or two neighboring trough sampling points on the envelope of the marker sound in the source sound sample;
$a$ represents an error threshold value of the spacing between two neighboring peak sampling points or two neighboring trough sampling points.

Preferably, before the step of determining that the speech data segment has the envelope characteristic 1, the method further comprises: calculating with the calculation result of the function $S(D_{DXi}, D_{OXi})$ according to the following formula;

$$\frac{\sum_{i=1}^{n-1} S(D_{DXi}, D_{OXi})}{n-1} \geq b$$

**EP 2 479 748 B1**

in the step of determining that the speech data segment has the envelope characteristic 1, that the speech data segment has the envelope characteristic 1 is determined only when the above formula is satisfied;

wherein, $n$ is the number of peak sampling points or trough sampling points on the envelope of the speech data segment, and $b$ is a valid threshold value of the spacing of two neighboring peak sampling points or two neighboring trough sampling points.

The method further comprises:

calculating with the peak sampling points and the trough sampling points extracted from the speech data segment according to the following formula, when the calculation result of function $C(tg_{di}, tg_{oi})$ is 1, determining that the speech data segment has the envelope shape characteristic 2:

$$C(tg_{di}, tg_{oi}) = \begin{cases} \begin{cases} 1 & if \left( \dfrac{|\dfrac{tg_{oi}}{tg_{di}} - \dfrac{y_{po(\frac{i+1}{2})}}{y_{pd(\frac{i+1}{2})}}|}{\dfrac{tg_{oi}}{tg_{di}}} \leq c \right) \\ \\ 0 & etc \end{cases} & if\ i\ is\ odd \\ \\ \begin{cases} 1 & if \left( \dfrac{|\dfrac{tg_{oi}}{tg_{di}} - \dfrac{y_{po(\frac{i}{2}+1)}}{y_{pd(\frac{i}{2}+1)}}|}{\dfrac{tg_{oi}}{tg_{di}}} \leq c \right) \\ \\ 0 & etc \end{cases} & if\ i\ is\ even \end{cases}$$

wherein, $c$ is an error threshold value of a valid tangent value;

$\dfrac{tg_{oi}}{tg_{du}}$ represents the first ratio;

$\dfrac{y_{po(\frac{i+1}{2})}}{y_{p_{d}(\frac{i+1}{2})}}$ represents the second ratio when the serial number of the sampling point is even;

$$\frac{y_{po_{(\frac{i}{2}+1)}}}{y_{p_{d(\frac{i}{2}+1)}}}$$ represents the second ratio when the serial number of the sampling point is odd.

Preferably, before the step of determining that the speech data segment has the envelope shape characteristic 2, the method further comprises: calculating with the calculation result of function $C(tg_{di}, tg_{oi})$ according to the following formula,

$$\frac{\sum_{i=1}^{2(n-1)} C(tg_{di}, tg_{oi})}{2(n-1)} \geq d$$

in the step of determining that the speech data segment has the envelope shape characteristic 2, that the speech data segment has the envelope characteristic 2 is determined only when the above formula is satisfied;

wherein, $n$ is the number of peak sampling points or trough sampling points on the envelope of the speech data segment, and $d$ is a valid threshold value of a tangent value.

The step of recording a speech data segment from an attenuation sample comprises: determining valid audio data in the attenuation sample, and recording a speech data segment from the valid audio data in the attenuation sample.

The step of determining valid audio data in the attenuation sample comprises:

when the number of sampling points of a segment of audio data of the attenuation sample reaches a preset data validity threshold value $V_t$, and the number of continuous invalid sampling points in the sampling points is less than a preset data invalidation threshold value $I_t$, determining that the segment of audio data are valid audio data, and when the absolute value of the amplitude of the sampling point is less than a preset amplitude threshold value $A_t$, determining that this sampling point is an invalid sampling point.

Also an apparatus for identifying a marker sound is disclosed in the present invention, comprising a sampling and extracting module and a judgment processing module, wherein:

the sampling and extracting module is configured to, sample out a speech data segment from an attenuation sample, and extract an envelope characteristic sampling points from all sampling points of the speech data segment, wherein, the number of sampling points of the sampled speech data segment is equal to the number of sampling points of a marker sound sample, the envelope characteristic sampling points comprise peak sampling points and trough sampling points on the envelope;

the judgment processing module is configured to, judge whether the spacing of neighboring envelope characteristic sampling points in the speech data segment is equal to the spacing of the corresponding neighboring envelope characteristic sampling points in the marker sound in the source sound sample according to the envelope characteristic sampling points extracted by the sampling and extracting module, if yes, determine that the speech data segment is the marker sound, wherein the neighboring envelope characteristic sampling points are neighboring peak sampling points on the envelope, or neighboring trough sampling points on the envelope, or neighboring peak sampling point and trough sampling point on the envelope.

In the above apparatus, the judgment processing module is further configured to judge whether the spacing of neighboring envelope characteristic sampling points in this speech data segment is equal to the spacing of the corresponding neighboring envelope characteristic sampling points of the marker sound in the source sound sample by the following way of:

determining that the spacing of neighboring envelope characteristic sampling points in this speech data segment is equal to the spacing of the corresponding neighboring envelope characteristic sampling points of the marker sound in the source sound sample when the speech data segment has any one of following envelope shape characteristics:

an envelope shape characteristic 1, wherein the spacing of two neighboring peak sampling points on the envelope of the speech data segment is equal to the spacing of two neighboring peak sampling points on the envelope of the marker sound in the source sound sample; or the space of two neighboring trough sampling points on the envelope of the speech data segment is equal to the spacing of the two neighboring trough sampling points on the envelope of the marker sound in the source sound sample;

an envelope shape characteristic 2, wherein the ratio, of the tangent value of the angle between the line connecting the corresponding peak sampling point on the envelope of the marker sound of the source sound sample to the coordinate point on axis x of its neighbor trough sampling point and axis x, to the tangent value of the angle between the line connecting the sampled peak sampling point on the envelope of the speech data segment to coordinate point on axis x of its neighbor trough sampling point and axis x, is a first ratio, and the ratio of the amplitude of the corresponding peak sampling point of the envelope of the marker sound in the source sound sample to the amplitude of the peak sampling point on the envelope of the speech data segment is a second ratio, wherein these two ratios are equal.

Wherein, the judgment processing module is also configured to, calculate with the peak sampling points and the trough sampling points extracted from the speech data segment according to the following formula, determine that the speech data segment has the envelope shape characteristic 1 when the calculation result of function $S(D_{DXi}, D_{OXi})$ is 1;

$$S(D_{DXi}, D_{OXi}) = \begin{cases} 1 & if\left(\dfrac{|D_{DXi} - D_{OXi}|}{D_{OXi}} \le a\right) \\ \\ 0 & etc \end{cases}$$

wherein, $D_{DXi}$ represents a spacing of two neighboring peak sampling points or two neighboring trough sampling points on the envelope extracted from the speech data segment;

$D_{OXi}$ represents a spacing of two neighboring peak sampling points or two neighboring trough sampling points on the envelope of the marker sound in the source sound sample;

$a$ represents an error threshold value of the spacing between two neighboring peak sampling points or two neighboring trough sampling points.

The judgment processing module is also configured to, calculate with the peak sampling points and the trough sampling points extracted from the speech data segment according to the following formula, determining that the speech data segment has the envelope shape characteristic 2 when the calculation result of function $C(tg_{di}, tg_{oi})$ is 1;

$$C(tg_{di}, tg_{oi}) = \begin{cases} \begin{cases} 1 & if\,(\dfrac{|\dfrac{tg_{oi}}{tg_{di}} - \dfrac{y_{po(\frac{i+1}{2})}}{y_{pd(\frac{i+1}{2})}}|}{\dfrac{tg_{oi}}{tg_{di}}} \le c) \\ \\ & \hspace{4cm} if\ i\ is\ odd \\ 0 & etc \end{cases} \\ \\ \begin{cases} 1 & if\,(\dfrac{|\dfrac{tg_{oi}}{tg_{di}} - \dfrac{y_{po(\frac{i}{2}+1)}}{y_{pd(\frac{i}{2}+1)}}|}{\dfrac{tg_{oi}}{tg_{di}}} \le c) \\ \\ & \hspace{4cm} if\ i\ is\ even \\ 0 & etc \end{cases} \end{cases}$$

wherein, $c$ is an error threshold value of a valid tangent value;

$\dfrac{tg_{oi}}{tg_{du}}$ represents the first ratio;

$\dfrac{y_{po(\frac{i+1}{2})}}{y_{Pd(\frac{i+1}{2})}}$ represents the second ratio when the serial number of the sampling point is even;

$\dfrac{y_{po(\frac{i}{2}+1)}}{y_{Pd(\frac{i}{2}+1)}}$ represents the second ratio when the serial number of the sampling point is odd. 2

By using the technical schemes according to the present invention, the identification of marker sound in time domain solves the problem of misjudgment of marker sound caused by introduction of noise with the same frequency. Moreover, the technical scheme according to the present invention does not have a requirement for the frequency of the marker sound, therefore improving the hearing feeling of a tester.

**Brief Description of Drawings**

FIG. 1 is a schematic diagram of a principle of characteristic 1 of a method according to the present invention;

FIG. 2 is a schematic diagram of a principle of characteristic 2 of a method according to the present invention.

FIG. 3 is a flowchart of checking whether the audio data is valid in an attenuation sample;

FIG. 4 is a flowchart of extracting peak sampling points and trough sampling points ;

FIG. 5 is a flowchart of checking a peak spacing of valid audio data in the attenuation sample;

FIG. 6 is a flowchart of checking a Tangent value *tg* of valid audio data in the attenuation sample.

**Preferred Embodiments of the Present Invention**

The main idea of the present invention is that, because the frequency of the speech signal will not change when the speech signal is transmitted in a communication network, so the period of the speech signal will not change. If the source sound sample sent by a sender and the attenuation sample received by a receiver are all discrete signals, and the sender and the receiver adopt an identical sampling spacing, then the spacing between any two neighboring sampling points in the speech signal along the x axis would not change. Therefore, it is proposed in the technical scheme of the present invention that, a speech data segment is recorded from an attenuation sample, and envelope characteristic sampling points (i.e. peak sampling points and trough sampling points on the envelope) are extracted from the speech data segment, for the extracted sampling points, if the spacing of neighboring envelope characteristic sampling points is equal to the spacing of neighboring envelope characteristic sampling points corresponding to the marker sound in the source sound sample, it can be judged that the speech data segment is the marker sound, wherein, the neighboring characteristic sampling points are neighboring peak sampling points on the envelope, or neighboring trough sampling points on the envelope, or neighboring peak sampling point and trough sampling point on the envelope, specifically, when any speech data segment in the attenuation sample has any of the following envelope shape characteristics (called as an envelope shape characteristic of the marker), it is judged that, in the attenuation sample, the spacing between two neighboring sampling points in any speech data segment is equal to the spacing between two neighboring sampling points of the marker sound in the source sound sample:

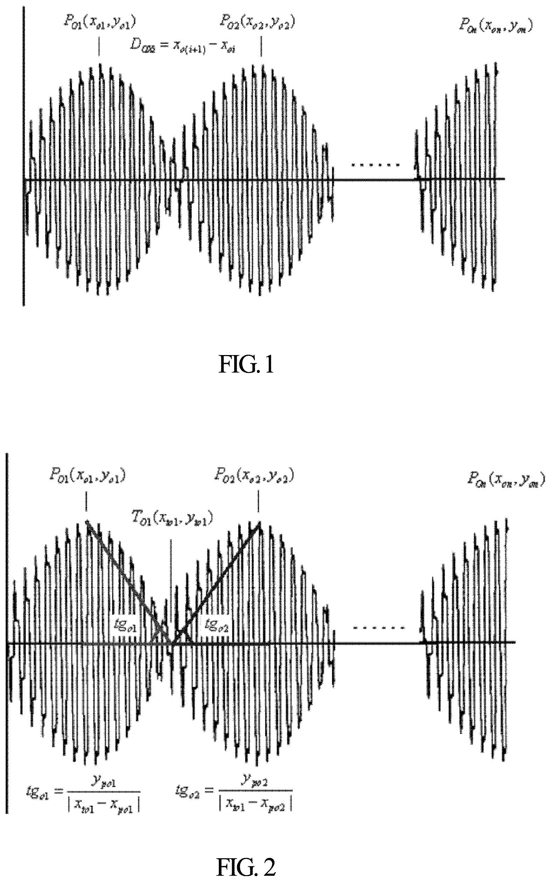

An envelope shape characteristic 1 of the marker: the spacing of sampling points of two neighboring peaks (or two neighboring troughs) on the envelope of the speech data segment of the attenuation sample is equal to the spacing of sampling points of two neighboring peaks (or two neighboring troughs) on the envelope of the marker sound of the source sound sample;
for example, as shown in FIG. 1, there are n peak sampling points, $\{P_{O1}(x_{o1},y_{o1}), P_{O2}(x_{o2},y_{o2})...P_{On}(x_{on},y_{on})\}$, existing in the marker sound envelope in the source sound sample, wherein, $P_{Oi}$ and $P_{O(i+1)}$ are sampling points of neighboring peaks, then the difference between $P_{Oi}$ and $P_{O(i+1)}$ along x axis is as shown in formula (1):

$$D_{OXi} = x_{o(i+1)} - x_{oi} \qquad \text{Formula (1)}$$

If there are also n peak sampling points, $\{P_{D1}(x_{d1},y_{d1}), P_{D2}(x_{d2},y_{d2})...P_{Dn}(x_{dn},y_{dn})\}$, existing in an envelope of a speech data segment of the attenuation sample, wherein $P_{Di}$ and $P_{D(i+1)}$ are sampling points of neighboring peaks, then the difference between $P_{Di}$ and $P_{D(i+1)}$ along x axis is as shown in formula (2):

$$D_{DXi} = x_{d(i+1)} - x_{di} \qquad \text{Formula (2)}$$

Because the source sound sample and the attenuation sample have an identical frequency, the spacing along x axis of the two neighboring peak sampling points on the envelope of the marker sound in the source sound sample should be equal to the spacing along x axis of the corresponding two sampling points in the attenuation sample, here, a function $S(D_{DXi},D_{OXi})$ is defined as formula (3):

$$S(D_{DXi}, D_{OXi}) = \begin{cases} 1 & if \left( \dfrac{| D_{DXi} - D_{OXi} |}{D_{OXi}} \leq a \right) \\ \\ 0 & etc \end{cases}$$

Formula (3)

in the formula, $a$ is an error threshold value of the spacing of two neighboring peak sampling points, which may specifically be set according to the actual situation of the test environment, when $\dfrac{| D_{DXi} - D_{OXi} |}{D_{OXi}}$ is not over the error threshold value, it is believed that $D_{DXi}$ is a valid peak spacing. For the whole $D_{DXi}$, if formula (1) is satisfied, it is believed that this segment of data in the attenuation sample complies with to the envelope shape characteristic 1 of the marker sound:

$$\frac{\sum\limits_{i=1}^{n-1} S(D_{DXi}, D_{OXi})}{n-1} \geq b \quad \text{Formula (4)}$$

wherein, $b$ is a valid threshold value of the spacing of neighboring peak sampling points, which can be set specifically according to the actual situation of the testing environment.

An envelope shape characteristic 2 of the marker sound: the ratio, of the tangent value of the angle between the line connecting the peak sampling point on the envelope of the source sound sample to the coordinate point on axis X of its neighbor trough sampling point in the positive direction of axis Y and axis X, to the tangent value of the angle between the line connecting the corresponding peak sampling point on the envelope of the speech data segment of the attenuation sample to the coordinate point on axis X of its neighbor trough sampling point in the positive direction of Y axis and axis X, is a first ratio, and the ratio of the amplitude of the peak sampling point of the source sound sample to the amplitude of the corresponding peak sampling point on the envelope of the speech data segment of the attenuation sample is a second ratio, these two ratios are equal.

For example, as shown in FIG. 2, assuming that there are n peak sampling points existing in the envelope of the marker sound sample $\{P_{O1}(x_{po1}, y_{po1}), P_{O2}(x_{po2}, y_{po2})... P_{On}(x_{pon}, y_{pon})\}$, and a tough sampling point $T_{O1}(x_{to1}, y_{to1})$ $(y_{to1}>0)$ exists between any two neighboring peak sampling points $P_{Oi}$ and $P_{O(i+1)}$, and there are n-1 trough sampling points altogether, the set of which is: $\{T_{O1}(x_{to1}, y_{to1}), T_{O2}(x_{to2}, y_{to2}) ... T_{O(n-1)}(x_{to(n-1)}, y_{to(n-1)})\}$. Then the tangent value of the angle between the line connecting the coordinate point on axis X of $T_{Oi}$ to the peak sampling point and axis X is as shown in formula (5):

$$tg_{oi} = \begin{cases} \dfrac{y_{po\left(\frac{i+1}{2}\right)}}{\left| x_{to\left(\frac{i+1}{2}\right)} - x_{po\left(\frac{i+1}{2}\right)} \right|} & if\ i\ is\ odd \\ \\ \dfrac{y_{po\left(\frac{i}{2}+1\right)}}{\left| x_{to\left(\frac{i}{2}\right)} - x_{po\left(\frac{i}{2}+1\right)} \right|} & if\ i\ is\ even \end{cases}$$

Formula (5)

From above, it can be known that, there are $2\times(n\text{-}1)$ tangent values in the source sound sample, the set of which is: $\{tg_{o1}, tg_{o2}...tg_{o(2n-3)}, tg_{o(2n-2)}\}$;

If there are n peak sampling points in the envelope of a speech data segment of the attenuation sample, the set of these sampling points is $\{P_{D1}(x_{pd1}, y_{pd1}), P_{D2}(x_{pd2}, y_{pd2})...P_{Dn}(x_{pdn}, y_{pdn})\}$, then there is a trough sampling point $T_{Di}$ between any two neighboring peak sampling points $P_{Di}$ and $P_{D(i+1)}$, there are n-1 trough sampling points altogether, the set of which is: $\{T_{D1}(x_{td1}, y_{td1}), T_{D2}(x_{td2}, y_{td2})... T_{D(n-1)}(x_{td(n-1)}, y_{td(n-1)})\}$, the tangent value of the angle between the line connecting the coordinate point on axis x of $T_{Di}$ to $P_{Di}$ and axis X is as shown in formula (6):

$$tg_{di} = \begin{cases} \dfrac{y_{pd(\frac{i+1}{2})}}{\left| x_{td(\frac{i+1}{2})} - x_{pd\left(\frac{i+1}{2}\right)} \right|} & \text{if } i \text{ is odd} \\[2em] \dfrac{y_{pd(\frac{i}{2}+1)}}{\left| x_{td(\frac{i}{2})} - x_{pd(\frac{i}{2}+1)} \right|} & \text{if } i \text{ is even} \end{cases} \qquad \text{Formula (6)}$$

From above, it can be seen that there are $2\times(n-1)$ tangent values in this segment of data of the attenuation sample, the set of which is: $\{tg_{d1}, tg_{d2}...tg_{d(2n-3)}, tg_{d(2n-2)}\}$.

The tangent value of the marker sound in the source sound sample is compared with the corresponding tangent value in the attenuation sample data according to formula (7):

$$\frac{tg_{oi}}{tg_{di}} = \begin{cases} \dfrac{y_{po(\frac{i+1}{2})} \times \left| x_{td(\frac{i+1}{2})} - x_{pd\left(\frac{i+1}{2}\right)} \right|}{y_{pd(\frac{i+1}{2})} \times \left| x_{to(\frac{i+1}{2})} - x_{po\left(\frac{i+1}{2}\right)} \right|} & \text{if } i \text{ is odd} \\[2em] \dfrac{y_{po(\frac{i}{2}+1)} \left| x_{td(\frac{i}{2})} - x_{pd(\frac{i}{2}+1)} \right|}{y_{pd(\frac{i}{2}+1)} \left| x_{to(\frac{i}{2})} - x_{po(\frac{i}{2}+1)} \right|} & \text{if } i \text{ is even} \end{cases} \qquad \text{Formula (7)}$$

In the above formula, because the spacing between the neighboring sampling points on axis X of the source sound sample and the spacing between the neighboring sampling points on axis X of the attenuation sample are the

same, that is, $\left| x_{td(\frac{i+1}{2})} - x_{pd\left(\frac{i+1}{2}\right)} \right|$ is equal to $\left| x_{to(\frac{i+1}{2})} - x_{po\left(\frac{i+1}{2}\right)} \right|$, $\left| x_{td(\frac{i}{2})} - x_{pd(\frac{i}{2}+1)} \right|$ is equal to

$\left| x_{to(\frac{i}{2})} - x_{po(\frac{i}{2}+1)} \right|$, thus a result as shown in formula (8) is obtained.

$$\frac{tg_{oi}}{tg_{di}} = \begin{cases} \dfrac{y_{po(\frac{i+1}{2})}}{y_{pd(\frac{i+1}{2})}} & \text{if } i \text{ is odd} \\[2em] \dfrac{y_{po(\frac{i}{2}+1)}}{y_{pd(\frac{i}{2}+1)}} & \text{if } i \text{ is even} \end{cases} \qquad \text{Formula (8)}$$

Here, a function $C(tg_{di}, tg_{oi})$ shown in formula (9) is defined as:

$$C(tg_{di}, tg_{oi}) = \begin{cases} \begin{cases} 1 & if\left(\dfrac{|\dfrac{tg_{oi}}{tg_{di}} - \dfrac{y_{po(\frac{i+1}{2})}}{y_{pd(\frac{i+1}{2})}}|}{\dfrac{tg_{oi}}{tg_{di}}} \le c\right) \\ & \qquad\qquad\qquad\qquad if\ i\ is\ odd \\ 0 & etc \end{cases} \\ \\ \begin{cases} 1 & if\left(\dfrac{|\dfrac{tg_{oi}}{tg_{di}} - \dfrac{y_{po(\frac{i}{2}+1)}}{y_{pd(\frac{i}{2}+1)}}|}{\dfrac{tg_{oi}}{tg_{di}}} \le c\right) \\ & \qquad\qquad\qquad\qquad if\ i\ is\ even \\ 0 & etc \end{cases} \end{cases}$$
Formula (9)

wherein, $c$ is an error threshold value of a valid tangent value, which can be set specifically according to the actual testing environment. If $\left(\dfrac{|\dfrac{tg_{oi}}{tg_{di}} - \dfrac{y_{po(\frac{i+1}{2})}}{y_{pd(\frac{i+1}{2})}}|}{\dfrac{tg_{oi}}{tg_{di}}}\right)$ (when $i$ is odd) or $\left(\dfrac{|\dfrac{tg_{oi}}{tg_{di}} - \dfrac{y_{po(\frac{i}{2}+1)}}{y_{pd(\frac{i}{2}+1)}}|}{\dfrac{tg_{oi}}{tg_{di}}}\right)$ (when $i$ is even) is less than the error threshold value, it thus is believed that this tangent value is a valid tangent value. For all of the $tg_d$S, if satisfying formula (10) is satisfied, it then is believed that this segment of data in the attenuation sample complies with the envelope shape characteristic 2 of the marker sound:

$$\frac{\sum_{i=1}^{2(n-1)} C(tg_{di}, tg_{oi})}{2(n-1)} \ge d$$
Formula (10)

wherein, d is a valid threshold value of a tangent value, which can be specifically set according to the actual situation of the testing environment.

The technical scheme of the present invention will be further described in detail in combination with drawings and specific embodiments.

An apparatus for identifying a marker sound based on speech envelope characteristics, comprising at least a sampling and extracting module and a judgment processing module. Functions of each module will be described as follows.

The sampling and extracting module is used to sample out a speech data segment from an attenuation sample, and is used to extract envelope characteristic sampling points from all of the sampling points of the speech data segment, wherein, the number of sampling points of the sampled speech data segment is equal to the number of sampling points of the marker sound sample, the envelope characteristic sampling points comprise peak sampling points and trough sampling points on the envelope;

the judgment processing module is used to judge whether the spacing of neighboring envelope characteristic sampling points in the speech data segment is equal to the spacing of the corresponding neighboring envelope characteristic sampling points in the marker sound in the source sound sample according to the extracted envelope characteristics sampling points extracted by the sampling and extracting module, if yes, it is judged that the speech data segment is the marker sound, wherein the neighboring envelope characteristic sampling points are neighboring peak sampling points on the envelope, or neighboring trough sampling points on the envelope, or neighboring peak sampling point and trough sampling point on the envelope.

Wherein, the judgment processing module may judge that the spacing of neighboring envelope characteristic sampling points in this speech data segment is equal to the spacing of the corresponding neighboring envelope characteristic sampling points of the marker sound in the source sound sample (that is, judge whether the speech data segment is the marker sound), by judging whether the sampled speech data segment has any one of following envelope shape characteristics:

an envelope shape characteristic 1, wherein the spacing of two neighboring peak sampling points on the envelope of the sampled speech data segment is equal to the spacing of two neighboring peak sampling points on the envelope of the marker sound in the source sound sample; or the space of two neighboring trough sampling points on the envelope of the sampled speech data segment is equal to the spacing of the two neighboring trough sampling points on the envelope of the marker sound in the source sound sample;

specifically, the judgment processing module calculates with the peak sampling points and the trough sampling points extracted from the speech data segment according to the following formula, when the calculation result of a function $S(D_{DXi}, D_{OXi})$ is 1, it is determined that the speech data segment has the envelope shape characteristic 1:

$$S(D_{DXi}, D_{OXi}) = \begin{cases} 1 & if \left( \dfrac{|D_{DXi} - D_{OXi}|}{D_{OXi}} \leq a \right) \\ 0 & etc \end{cases}$$

wherein, $D_{DXi}$ represents a spacing between two neighboring peak sampling points or two neighboring trough sampling points on the envelope extracted from the speech data segment;

$D_{OXi}$ represents a spacing between two neighboring peak sampling points or two neighboring trough sampling points on the envelope of the marker sound in the source sound sample;

$a$ represents an error threshold value of the spacing between two neighboring peak sampling points or two neighboring trough sampling points.

An envelope shape characteristic 2, wherein the ratio, of the tangent value of the angle between the line connecting the corresponding peak sampling point on the envelope of the source sound sample to the coordinate point on axis X of its neighbor trough sampling point and axisX, to the tangent value of the angle between the line connecting the sampled peak sampling point on the envelope of the speech data segment to coordinate point on axis X of its neighbor trough sampling point and axis X, is a first ratio, and the ratio of the amplitude of the corresponding peak sampling point of the envelope of the marker sound in the source sound sample to the amplitude of the peak sampling point on the envelope of the speech data segment is a second ratio, these ratios are equal.

specifically, the judgment processing module calculates the peak sampling points and the trough sampling points extracted from the speech data segment, when the calculation result of a function $C(tg_{di}, tg_{oi})$ is 1, it is judged that the speech data segment has the envelope shape characteristic 2:

$$C(tg_{di}, tg_{oi}) = \begin{cases} \begin{cases} 1 & if\left(\dfrac{\left|\dfrac{tg_{oi}}{tg_{di}} - \dfrac{y_{po\left(\frac{i+1}{2}\right)}}{y_{pd\left(\frac{i+1}{2}\right)}}\right|}{\dfrac{tg_{oi}}{tg_{di}}} \le c\right) \\ & \qquad\qquad\qquad\qquad if\ i\ is\ odd \\ 0 & etc \end{cases} \\[2em] \begin{cases} 1 & if\left(\dfrac{\left|\dfrac{tg_{oi}}{tg_{di}} - \dfrac{y_{po\left(\frac{i}{2}+1\right)}}{y_{pd\left(\frac{i}{2}+1\right)}}\right|}{\dfrac{tg_{oi}}{tg_{di}}} \le c\right) \\ & \qquad\qquad\qquad\qquad if\ i\ is\ even \\ 0 & etc \end{cases} \end{cases}$$

wherein, $c$ is an error threshold value of a valid tangent value;

$\dfrac{tg_{oi}}{tg_{du}}$ represents the first ratio;

$\dfrac{y_{po\left(\frac{i+1}{2}\right)}}{y_{Pd\left(\frac{i+1}{2}\right)}}$ represents the second ratio when the serial number of the sampling point is even;

$\dfrac{y_{po\left(\frac{i}{2}+1\right)}}{y_{Pd\left(\frac{i}{2}+1\right)}}$ represents the second ratio when the serial number of the sampling point is odd.

The specific process for the above-said apparatus identifying marker sound will be described as follows, comprising the following steps.

In step 1, whether there are valid audio data existing in an attenuation sample is checked, when there are valid audio data, step 2 is executed;

in this step, during a test of wireless communication speech quality, the format of the speech data sent by a sender is as follows:

mute stage 1 + marker sound [+ mute state 2] + source sound sample ..., repeating.

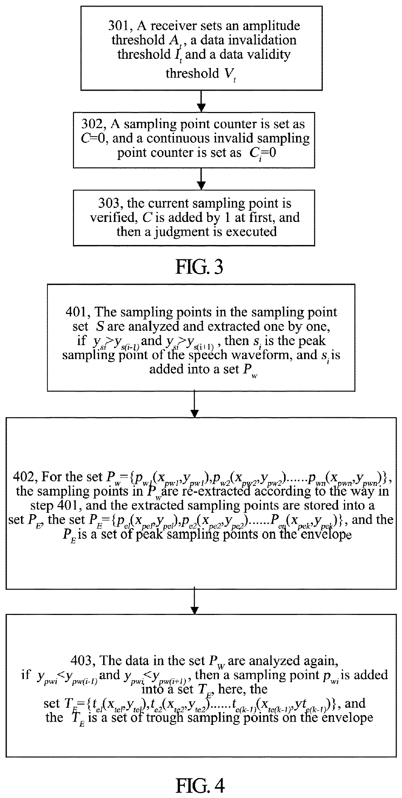

The receiver takes a reception of non-mute data in the mute stage 1 as a start of a valid speed data, however, because a signal will be subject to external interferences during transmission, there will be no absolute mute data (the amplitude of which is 0) in the attenuation sample data received by the receiver, meanwhile there may be a "squealing" phenomenon. Therefore the interference for the received speech data will be eliminated according to the present example, the specific process is as shown in FIG. 3, comprising the following steps.

In step 301, a receiver sets an amplitude threshold $A_t$, a data invalidation threshold $I_t$ and a data validity threshold $V_t$, wherein the receiver sets each threshold value according the actual network quality;

wherein, the amplitude threshold $A_t$ is used to represent that, when an absolute value $A$ of the amplitude of a sampling point is greater than or equal to $A_t$, the receiver believes that the sampling point is a valid sampling point, when an absolute value of the amplitude of the sampling point is less than $A_t$, the receiver believes that the sampling point is an invalid sampling point;

the data invalidation threshold $I_t$ is used to represent that, when the number of continuous invalid sampling points is over $I_t$, the receiver believes that all of the former data are invalid data, a re-verification starting from the sampling point at which the number of the continuous invalid sampling points reaches $I_t$ is needed;

the data validity $V_t$, $V_t > I_t$, is used to represent that, when the number of sampling points in the attenuation sample reaches $V_t$ and the number of invalid sampling points in these $V_t$ sampling points is less than $I_t$, the receiver believes that the segment of data is valid data.

In step 302, a sampling point counter is set as $C=0$, and a continuous invalid sampling point counter is set as $C_i=0$; in step 303, the current sampling point is verified, $C$ is added by 1 at first, and then a judgment is executed, if the absolute value $A$ of the amplitude of the current sampling point is less than $A_t$ (that is, the current sampling point is a valid sampling point), and the former sampling point is an invalid sampling point, $C_i$ is added by 1; if the former sampling point is a valid data point, $C_i$ is set as 1. Next, if $C_i >= I_t$, it is believed that the former data are invalid, $C$ and $C_i$ are set as 0 at first, and then a re-verification is executed from the next sampling point; if $C_i < I_t$ and $C > V_t$, it is believed that the current data are valid data, the procedure ends, step 2 is executed; if $C_i < I_t$ and $C < V_t$, a re-verification is executed from the next sampling point.

In step 2, the envelope characteristic sampling points are extracted from the attenuation sample, i.e. the peak sampling points and the trough sampling points on the envelope;

in this step, a receiver records the following sampling points by taking an initial point of the valid data as a start, when the number of the recorded sampling points reaches the number of the sampling points of the marker sound sample, it is to begin to extract the peak sampling points of the envelope, the specific operation process is as shown in FIG. 4, wherein, assuming that there are $n$ sampling points altogether in the marker sound sample, the set of the sampling points $S=\{s_1(x_{s1},y_{s1}),s_2(x_{s2},y_{s2})......s_n(x_{sn},y_{sn})\}$, the number of peaks on the envelope of the marker sound sample is $k$, the specific extraction process comprises the following steps.

In step 401, the sampling points in the sampling point set $S$ are analyzed and extracted one by one, if $y_{si} > y_{s(i-1)}$ and $y_{si} > y_{s(i+1)}$, then $s_i$ is the peak sampling point of the speech waveform, and $s_i$ is added into a set $P_W$;

in step 402, for the set $P_W=\{p_{w1}(x_{pw1},y_{pw1}), p_{w2}(x_{pw2},y_{pw2})......P_{wn}(x_{pwn},y_{pwn})\}$, the sampling points in $P_W$ are re-extracted according to the way in step 401, and the extracted sampling points are stored into a set $P_E$, the set $P_E=\{p_{e1}(x_{pe1},y_{pe1}),p_{e2}(x_{pe2},y_{pe2})......P_{en}(x_{pek},y_{pek})\}$, and the $P_E$ is a set of the peak sampling points on the envelope;

in step 403, the data in set $P_W$ are analyzed again, if $y_{pwi} < y_{pw(i-1)}$ and $y_{pwi} < y_{pw(i+1)}$, then a sampling point $p_{wi}$ is added into a set $T_E$, here, the set $T_E=\{t_{e1}(x_{te1},y_{te1}),t_{e2}(x_{te2},y_{te2})......t_{e(k-1)}(x_{te(k-1)},y_{te(k-1)})\}$, and the $T_E$ is a set of trough sampling points on the envelope.

In step 3, whether the segment of the speech has an envelope shape characteristic of the marker sound is judged according to the extracted peak sampling points and the trough sampling points, if yes, it is indicated that the segment of the speech includes the marker sound, or else, it is indicated that the segment of the speech does not include the marker sound.

In this step, upon the receiver determines that the segment of the speech of the attenuation sample has any envelope shape characteristic of the marker sound according to the extracted peak sampling points and the trough sampling points, it can be determined that this segment of speech includes the marker sound. In a preferred scene, only when the receiver determines that the segment of the speech of the attenuation sample has all envelope shape characteristics of the marker sound (i.e. has the envelope shape characteristic 1 and the envelope shape characteristic 2) according to the extracted peak sampling points and the trough sampling points, could it determine that the segment of the speech includes the marker sound;

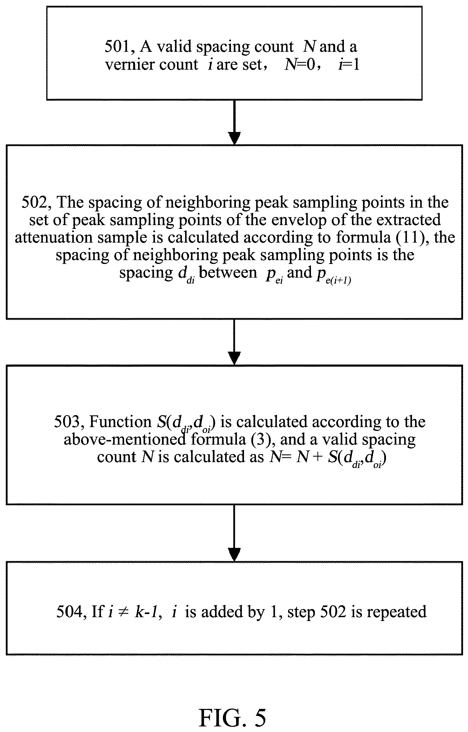

wherein, assuming that a spacing set of neighboring peak sampling points of the marker sound sample is $D_O=\{d_{o1},d_{o2}......d_{o(k-1)}\}$, then after extracting the peak sampling points and the trough sampling points, whether the segment of the speech sampled from the attenuation sample has the envelope shape characteristic 1 of the marker sound is judged according to a process as shown in FIG. 5:

in step 501, a valid spacing count $N$ and a vernier count $i$ are set, $N$=0, $i$=1;

in step 502, The spacing of neighboring peak sampling points in the set of peak sampling points of the envelope of the extracted attenuation sample is calculated according to a calculation of formula (11), the spacing of neighboring peak sampling points is the spacing $d_{di}$ between $p_{ei}$ and $p_{e(i+1)}$:

$$d_{di} = x_{pe(i+1)} - x_{pei} \qquad (0 \leq i \leq k-1) \qquad \text{Formula (11)}$$

in step 503, a function $S(d_{di}, d_{oi})$ is calculated according to the above-mentioned formula (3), and a valid spacing count $N$ is calculated as $N = N + S(d_{di}, d_{oi})$;

in step 504, if $i \neq k-1$, $i$ is added by 1, step 502 is repeated;

if $i = k - 1$, then a ratio $r_d$ of $N$ to $k - 1$ is calculated according to formula (12),

$$r_d = \frac{N}{k-1} \qquad \text{Formula (12)}$$

when $r_d \geq b$, it is believed that if the speech data segment of the attenuation sample complies with the envelope shape characteristic of the marker sound, the segment of the speech is the marker sound; or else, it is believed that the speech data are invalid data.

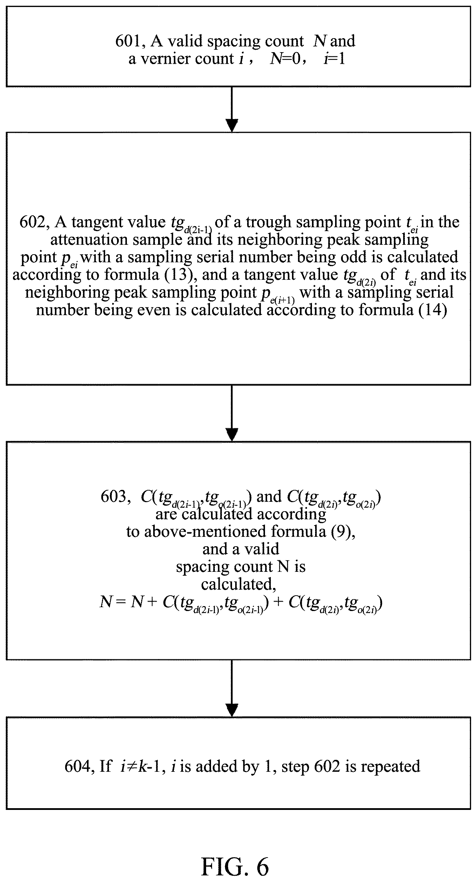

It is assumed that, a set of the tangent values of an angle between a line connecting a peak sampling point on the envelope of the marker sound sample to its neighboring trough sampling point in the positive direction of axis Y and axis X is : $tg_O$={$tg_{o1}$,$tg_{o2}$......$tg_{o(2k-3)}$,$tg_{o(2k-2)}$)}, then according to a process as shown in FIG. 6, it s to judge whether the segment of the speech sampled from the attenuation sample has the envelope shape characteristic 2 of the marker sound, specifically comprises the following steps.

in step 601, a valid spacing count $N$ and a vernier count $i$ are set, $N$=0, $i$=1;

in step 602, a tangent value $tg_{d(2i-1)}$ of a trough sampling point $t_{ei}$ in the attenuation sampling and a neighboring peak sampling point $p_{ei}$ with a odd sampling serial number is calculated according to formula (13), and a tangent value $tg_{d(2i)}$ of $t_{ei}$ and a neighboring peak sampling point $p_{e(i+1)}$ with an even sampling serial number is calculated according to formula (14), wherein,

$$tg_{d(2i-1)} = \frac{y_{pei}}{x_{tei} - x_{pei}} \qquad (0 \leq i \leq k-1) \qquad \text{Formula (13)}$$

$$tg_{d(2i)} = \frac{y_{pe(i+1)}}{x_{pe(i+1)} - x_{tei}} \qquad (0 \leq i \leq k-1) \qquad \text{Formula (14)}$$

in step 603, $C(tg_{d(2i-1)}, tg_o(_{2i-1}))$ and $C(tg_{d(2i)}, tg_{o(2i)})$ are calculated according to above-mentioned formula (9), and a valid spacing count N is calculated as $N = N + C(tg_{d(2i-1)}, tg_{o(2i-1)}) + C(tg_{d(2i)}, tg_{o(2i)})$;

in step 604, if $i \neq k-1$, $i$ is added by 1, step 602 is repeated;

if $i = k-1$, a ratio $r_d$ of $N$ to $k - 1$ is calculated according to formula (15),

$$r_{tg} = \frac{N}{2(k-1)} \qquad \text{Formula (15)}$$

if $r_d \geq d$, it is believed that the speech data segment of the attenuation sample complies with the envelope shape characteristic 2 of the marker sound, and the speech data segment is the marker sound; or else, it is believed that the speech data are invalid data.

Although preferred embodiments of the present invention are disclosed for illustrative purpose, those skilled in the art will appreciate that various improvements, additions and alternatives are also possible, therefore the scope of the present invention is not limited to the above-said embodiments.

Those of ordinary skill in the art may understand that the whole or part of steps of the above-mentioned method may be completed by program instructing relevant hardware, the program may be stored in a computer readable storage medium such as a read only memory, a disk or a compact disk. Alternatively, the whole or part of steps of the above-mentioned embodiments may also be implemented using one or more integrated circuits. Correspondingly, each module/unit in the above-mentioned embodiments may be implemented in form of hardware, or may be implemented in form of software function module. The present invention is not limited to any specified form of the combination of hardware and software.

**Industrial Applicability**

By using the technical schemes according to the present invention, the identification of the marker sound in time domain solves the problem of a misjudgment of a marker sound caused by the introduction of noise with the same frequency. Moreover, the technical scheme according to the present invention does not have requirement for the frequency of a marker sound, therefore improving the hearing feeling of a tester.

**Claims**

1.  A method for identifying a marker sound, comprising:

    recording a speech data segment from an attenuation sample, wherein a number of sampling points of the speech data segment is equal to a number of sampling points of the marker sound sample, and extracting envelope characteristic sampling points from all sampling points of the speech data segment (S401, S402);
    if it is determined that a spacing between neighboring envelope characteristic sampling points in the speech data segment is equal to a spacing between corresponding neighboring envelope characteristic sampling points of a marker sound in a source sound sample according to the extracted envelope characteristic sampling points, determining that the speech data segment is the marker sound (S403); wherein the source sound sample is sent by a sender then received by a receiver as the an attenuation sample; wherein, the envelope characteristic sampling points comprise peak sampling points and trough sampling points on the envelope, the neighboring envelope characteristic sampling points are neighboring peak sampling points on the envelope, or neighboring trough sampling points on the envelope, or neighboring peak sampling point and trough sampling point on the envelope; wherein the spacing is a temporal distance between the neighboring peak sampling points or the neighboring trough sampling point;
    **characterized by** further comprising:
    when the speech data segment has any one of the following envelope shape characteristics, determining that the spacing between neighboring envelope characteristic sampling points in the speech data segment is equal to the spacing between corresponding neighboring envelope characteristic sampling points of the marker sound in the source sound sample:

    an envelope shape characteristic 1, wherein the spacing between two neighboring peak sampling points on the envelope of the speech data segment is equal to the spacing between two neighboring peak sampling points on the envelope of the marker sound in the source sound sample; or, the spacing between two neighboring trough sampling points on the envelope of the speech data segment is equal to the spacing between the two neighboring trough sampling points on the envelope of the marker sound in the source sound sample;
    an envelope shape characteristic 2, wherein a ratio, of a tangent value of an angle between a line connecting a corresponding peak sampling point on the envelope of the marker sound of the source sound sample to a coordinate point on axis x of a neighbor trough sampling point and the axis x, to a tangent value of an angle between a line connecting the peak sampling point on the envelope of the speech data segment to a coordinate point on axis x of a neighbor trough sampling point and the axis x, is a first ratio, and a ratio of an amplitude of the corresponding peak sampling point of the envelope of the marker sound in the source sound sample to an amplitude of the peak sampling point on the envelope of the speech data segment is a second ratio, wherein the first ratio and the second ratio are equal.

2.  The method according to claim 1, further comprising:
    calculating with the peak sampling points and the trough sampling points extracted from the speech data segment according to the following formula, when a calculation result of a function $S(D_{DXi},D_{OXi})$ is 1, determining that the speech data segment has the envelope shape characteristic 1:

$$S(D_{DXi}, D_{OXi}) = \begin{cases} 1 & if \left( \dfrac{|D_{DXi} - D_{OXi}|}{D_{OXi}} \leq a \right) \\ \\ 0 & etc \\ \\ \end{cases}$$

wherein, $D_{DXi}$ represents a spacing between two neighboring peak sampling points or two neighboring trough sampling points on the envelope extracted from the speech data segment;

$D_{OXi}$ represents a spacing between two neighboring peak sampling points or two neighboring trough sampling points on the envelope of the marker sound in the source sound sample;

$a$ represents an error threshold value of the spacing between two neighboring peak sampling points or two neighboring trough sampling points.

3. The method according to claim 2, wherein,

before the step of determining that the speech data segment has the envelope characteristic 1, the method further comprises: calculating with the calculation result of the function $S(D_{DXi}, D_{OXi})$ according to the following formula:

$$\frac{\sum\limits_{i=1}^{n-1} S(D_{DXi}, D_{OXi})}{n-1} \geq b$$

in the step of determining that the speech data segment has the envelope characteristic 1, that the speech data segment has the envelope characteristic 1 is determined only when the above formula is satisfied;

wherein, $n$ is a number of the peak sampling points or the trough sampling points on the envelope of the speech data segment, and $b$ is a valid threshold value of the spacing between two neighboring peak sampling points or two neighboring trough sampling points.

4. The method according to claim 1, further comprising:

calculating with the peak sampling points and the trough sampling points extracted from the speech data segment according to the following formula, when a calculation result of a function $C(tg_{di}, tg_{oi})$ is 1, determining that the speech data segment has the envelope shape characteristic 2:

$$
C(tg_{di}, tg_{oi}) = \begin{cases} \begin{cases} 1 & if\left(\dfrac{\left|\dfrac{tg_{oi}}{tg_{di}} - \dfrac{y_{po(\frac{i+1}{2})}}{y_{pd(\frac{i+1}{2})}}\right|}{\dfrac{tg_{oi}}{tg_{di}}} \leq c\right) \\ & \\ 0 & etc \end{cases} & if\ i\ is\ odd \\ \\ \begin{cases} 1 & if\left(\dfrac{\left|\dfrac{tg_{oi}}{tg_{di}} - \dfrac{y_{po(\frac{i}{2}+1)}}{y_{pd(\frac{i}{2}+1)}}\right|}{\dfrac{tg_{oi}}{tg_{di}}} \leq c\right) \\ & \\ 0 & etc \end{cases} & if\ i\ is\ even \end{cases}
$$

wherein, $c$ is an error threshold value of a valid tangent value;

$\dfrac{tg_{oi}}{tg_{du}}$ represents the first ratio;

$\dfrac{y_{po(\frac{i+1}{2})}}{y_{P_d(\frac{i+1}{2})}}$ represents the second ratio when a serial number of the sampling point is even;

$\dfrac{y_{po(\frac{i}{2}+1)}}{y_{P_d(\frac{i}{2}+1)}}$ represents the second ratio when a serial number of the sampling point is odd.

5. The method according to claim 4, wherein,
before the step of determining that the speech data segment has the envelope shape characteristic 2, the method further comprises: calculating with the calculation result of the function $C(tg_{di}, tg_{oi})$ according to the following formula;

$$\frac{\sum\limits_{i=1}^{2(n-1)} C(tg_{di}, tg_{oi})}{2(n-1)} \geq d$$

in the step of determining that the speech data segment has the envelope shape characteristic 2, that the speech data segment has the envelope characteristic 2 is determined only when the above formula is satisfied;
wherein, $n$ is the number of peak sampling points or trough sampling points on the envelope of the speech data segment, and $d$ is a valid threshold value the tangent value.

6. The method according to any one of claims 1 to 5, wherein,
the step of recording a speech data segment from an attenuation sample comprises: determining valid audio data in the attenuation sample, and recording a speech data segment of the valid audio data in the attenuation sample;
the step of determining valid audio data in the attenuation sample comprises:
when a number of sampling points of a segment of audio data of the attenuation sample reaches a preset data validity threshold value $V_t$, and a number of continuous invalid sampling points in the sampling points is less than a preset data invalidation threshold value $I_t$, determining that the segment of audio data are valid audio data, and when an absolute value of an amplitude of the sampling point is less than a preset amplitude threshold value $A_t$, determining that that sampling point is an invalid sampling point.

7. An apparatus for identifying a marker sound, comprising a sampling and extracting module and a judgment processing module, wherein:

the sampling and extracting module is configured to, sample out a speech data segment from an attenuation sample, and extract envelope characteristic sampling points from all sampling points of the speech data segment, wherein, a number of sampling points of the sampled speech data segment is equal to a number of sampling points of a marker sound sample, the envelope characteristic sampling points comprise peak sampling points and trough sampling points on the an envelope;
the judgment processing module is configured to, judge whether a spacing between neighboring envelope characteristic sampling points in the speech data segment is equal to a spacing between corresponding neighboring envelope characteristic sampling points in a marker sound in a source sound sample according to the extracted envelope characteristic sampling points extracted by the sampling and extracting module, if yes, determine that the speech data segment is the marker sound; wherein the source sound sample is sent by a sender then received by a receiver as the an attenuation sample; wherein the neighboring envelope characteristic sampling points are neighboring peak sampling points on the envelope or neighboring trough sampling points on the envelope or neighboring peak sampling point and trough sampling point on the envelope; the spacing is a temporal distance between the neighboring peak sampling points or the neighboring trough sampling point; **characterized in that**,the judgment processing module is further configured to judge whether the spacing between neighboring envelope characteristic sampling points in the speech data segment is equal to the spacing between the corresponding neighboring envelope characteristic sampling points of the marker sound in the source sound sample by the following way of:
determining that the spacing between neighboring envelope characteristic sampling points in the speech data segment is equal to the spacing between the corresponding neighboring envelope characteristic sampling points of the marker sound in the source sound sample when the speech data segment has any one of following envelope shape characteristics:

an envelope shape characteristic 1, wherein the spacing between two neighboring peak sampling points on the envelope of the speech data segment is equal to the spacing between two neighboring peak sampling points on the envelope of the marker sound in the source sound sample; or the spacing between two neighboring trough sampling points on the envelope of the speech data segment is equal to the spacing between the two neighboring trough sampling points on the envelope of the marker sound in the source sound sample;
an envelope shape characteristic 2, wherein a ratio, of a tangent value of an angle between a line connecting a corresponding peak sampling point on the envelope of the marker sound of the source sound sample to a coordinate point on axis x of a neighbor trough sampling point and the axis x, to a tangent value of an angle between a line connecting the peak sampling point on the envelope of the speech data segment to a coordinate point on axis x of a neighbor trough sampling point and the axis x, is a first ratio, and a ratio of an amplitude of the corresponding peak sampling point of the envelope of the marker sound in the source sound sample to an amplitude of the peak sampling point on the envelope of the speech data segment is a second ratio, wherein the first ratio and the second ratio are equal.

8. The apparatus according to claim7, wherein,
the judgment processing module is also configured to, calculate with the peak sampling points and the trough sampling points extracted from the speech data segment according to the following formula, determine that the speech data segment has the envelope shape characteristic 1 when a calculation result of a function $S(D_{Dxi}, D_{OXi})$ is 1;

$$S(D_{DXi}, D_{OXi}) = \begin{cases} 1 & if \left( \dfrac{|D_{DXi} - D_{OXi}|}{D_{OXi}} \leq a \right) \\ \\ 0 & etc \end{cases}$$

wherein, $D_{DXi}$ represents a spacing between two neighboring peak sampling points or two neighboring trough sampling points on the envelope extracted from the speech data segment;
$D_{OXi}$ represents a spacing between two neighboring peak sampling points or two neighboring trough sampling points on the envelope of the marker sound in the source sound sample;
$a$ represents an error threshold value of the spacing between two neighboring peak sampling points or two neighboring trough sampling points.

9. The apparatus according to claim 7, wherein,
the judgment processing module is also configured to, calculate with the peak sampling points and the trough sampling points extracted from the speech data segment according to the following formula, determining that the speech data segment has the envelope shape characteristic 2 when a calculation result of a function $C(tg_{di}, tg_{oi})$ is 1:

$$C(tg_{di}, tg_{oi}) = \begin{cases} \begin{cases} 1 & if\left(\dfrac{\left|\dfrac{tg_{oi}}{tg_{di}} - \dfrac{y_{po(\frac{i+1}{2})}}{y_{pd(\frac{i+1}{2})}}\right|}{\dfrac{tg_{oi}}{tg_{di}}} \le c\right) \\ & \hspace{4cm} if\ i\ is\ odd \\ 0 & etc \end{cases} \\[2cm] \begin{cases} 1 & if\left(\dfrac{\left|\dfrac{tg_{oi}}{tg_{di}} - \dfrac{y_{po(\frac{i}{2}+1)}}{y_{pd(\frac{i}{2}+1)}}\right|}{\dfrac{tg_{oi}}{tg_{di}}} \le c\right) \\ & \hspace{4cm} if\ i\ is\ even \\ 0 & etc \end{cases} \end{cases}$$

wherein, $c$ is an error threshold value of a valid tangent value;

$\dfrac{tg_{oi}}{tg_{du}}$ represents the first ratio;

$\dfrac{y_{po(\frac{i+1}{2})}}{y_{pd(\frac{i+1}{2})}}$ represents the second ratio when a serial number of the sampling point is even;

$\dfrac{y_{po(\frac{i}{2}+1)}}{y_{pd(\frac{i}{2}+1)}}$ represents the second ratio when a serial number of the sampling point is odd.

**Patentansprüche**

1.  Verfahren zur Identifizierung eines Markierungstons, aufweisend:

    Aufnehmen eines Sprachdatensegments aus einem gedämpften Tonmuster, wobei eine Anzahl von Abtastpunkten für das Sprachdatensegment gleich der Anzahl von Abtastpunkten des Markierungstonmusters ist, und Extrahieren von für die Hüllkurve charakteristischen Abtastpunkten aus der Menge aller Abtastpunkte des Sprachdatensegments (S401, S402);

falls festgestellt wird, dass gemäß den extrahierten, für die Hüllkurve charakteristischen Abtastpunkten ein Abstand zwischen benachbarten, für die Hüllkurve charakteristischen Abtastpunkten des Sprachdatensegments gleich einem Abstand zwischen korrespondierenden benachbarten, für die Hüllkurve charakteristischen Abtastpunkten eines Markierungstons in einer Quelltonprobe ist, Feststellen, dass das Sprachdatensegment dem Markierungston entspricht (S403);

wobei die Quelltonprobe durch einen Sender gesendet und anschließend durch einen Empfänger als das gedämpfte Tonmuster empfangen wird;

wobei, wenn die Menge der für die Hüllkurve charakteristischen Abtastpunkte sowohl Spitzen-Abtastpunkte als auch Tal-Abtastpunkte auf der Hüllkurve enthält, die benachbarten für die Hüllkurve charakteristischen Abtastpunkte benachbarte Spitzen-Abtastpunkte auf der Hüllkurve oder benachbarte Tal-Abtastpunkte auf der Hüllkurve oder ein Spitzen-Abtastpunkt mit einem benachbarten Tal-Abtastpunkt auf der Hüllkurve sind, wobei der Abstand eine zeitliche Distanz zwischen den benachbarten Spitzen-Abtastpunkten oder zwischen den benachbarten Tal-Abtastpunkten ist;

**dadurch gekennzeichnet, dass**

das Verfahren des Weiteren aufweist:

wenn das Sprachdatensegment eine der folgenden Hüllkurvenformcharakteristika aufweist, feststellen, dass der Abstand zwischen benachbarten, für die Hüllkurve charakteristischen Abtastpunkten in dem Sprachdatensegment gleich dem Abstand zwischen korrespondierenden benachbarten, für die Hüllkurve charakteristischen Abtastpunkten des Markierungstons in dem Quelltonmuster ist:

eine Hüllkurvenformcharakteristik 1, wobei der Abstand zwischen zwei benachbarten Spitzen-Abtastpunkten auf der Hüllkurve des Sprachdatensegments gleich dem Abstand zwischen zwei benachbarten Spitzen-Abtastpunkten auf der Hüllkurve des Markierungstons in dem Quelltonmuster ist; oder, der Abstand zwischen zwei benachbarten Tal-Abtastpunkten auf der Hüllkurve des Sprachdatensegments gleich dem Abstand zwischen den zwei benachbarten Tal-Abtastpunkten auf der Hüllkurve des Markierungstons in dem Quelltonmuster ist;

eine Hüllkurvenformcharakteristik 2, wobei ein Verhältnis eines Tangenswerts eines Winkels zwischen einer Linie, die einen korrespondierenden Spitzen-Abtastpunkt auf der Hüllkurve des Markierungstons des Quelltonmusters zu einem Koordinatenpunkt eines benachbarten Tal-Abtastpunkts auf einer x-Achse verbindet, und der x-Achse, zu einem Tangenswert eines Winkels zwischen einer Linie, die den Spitzen-Abtastwert auf der Hüllkurve des Sprachdatensegments zu einem Koordinatenpunkt eines benachbarten Tal-Abtastpunkts auf der x-Achse verbindet, und der x-Achse, ein erstes Verhältnis ist, und ein Verhältnis einer Amplitude des korrespondierenden Spitzen-Abtastpunkts auf der Hüllkurve des Markierungstons in dem Quelltonmuster zu einer Amplitude des Spitzen-Abtastpunkts auf der Hüllkurve des Sprachdatensegments ein zweites Verhältnis ist, wobei das erste Verhältnis und das zweite Verhältnis gleich sind.

**2.**  Verfahren gemäß Anspruch 1, des Weiteren aufweisend:

Berechnen, anhand der aus dem Sprachdatensegment extrahierten Spitzen-Abtastpunkte und Tal-Abtastpunkte, der folgenden Formel, und falls das berechnete Ergebnis einer Funktion $S(D_{DXI}, D_{0Xi})$ gleich 1 ist, Feststellen, dass das Sprachdatensegment die Hüllkurvenformcharakteristik 1 aufweist:

$$S(D_{DXi}, D_{OXi}) = \begin{cases} 1 & falls\left(\dfrac{|D_{DXi} - D_{OXi}|}{D_{OXi}} \le a\right) \\ 0 & sonst \end{cases}$$

wobei, $D_{DXI}$ einen Abstand zwischen zwei benachbarten Spitzen-Abtastpunkten oder zwei benachbarten Tal-Abtastpunkten auf der aus dem Sprachdatensegment extrahierten Hüllkurve repräsentiert;

$D_{0Xi}$ einen Abstand zwischen zwei benachbarten Spitzen-Abtastpunkten oder zwei benachbarten Tal-Abtastpunkten auf Hüllkurve des Markierungstons in dem Quelltonmuster repräsentiert;

$a$ einen Fehlerschwellwert bezüglich des Abstands zwischen zwei benachbarten Spitzen-Abtastpunkten oder zwei benachbarten Tal-Abtastpunkten repräsentiert.

3. Verfahren nach Anspruch 2, wobei das Verfahren, vor dem Schritt, bei dem festgestellt wird, dass das Sprachdatensegment die Hüllkurvenformcharakteristik 1 aufweist, des Weiteren aufweist:
Berechnen, anhand des Berechnungsergebnisses für die Funktion $S(D_{DXi}, D_{OXi})$, der folgenden Formel:

$$\frac{\sum_{i=1}^{n-1} S(D_{DXi}, D_{OXi})}{n-1} \geq b$$

wobei in dem Schritt, bei dem festgestellt wird, dass das Sprachdatensegment die Hüllkurvenformcharakteristik 1 aufweist, nur dann festgestellt wird, dass das Sprachdatensegment die Hüllkurvenformcharakteristik 1 aufweist, wenn die vorausgehende Formel erfüllt ist;

wobei $n$ eine Anzahl der Spitzen-Abtastpunkte oder der Tal-Abtastpunkte auf der Hüllkurve des Sprachdatensegments ist, und $b$ ein gültiger Schwellenwert bezüglich des Abstandes zwischen zwei benachbarten Spitzen-Abtastpunkten oder zwei benachbarten Tal-Abtastpunkten ist.

4. Verfahren nach Anspruch 1, des weiteren aufweisend:

Berechnen der nachfolgenden Formel anhand der aus dem Sprachdatensegment extrahierten Spitzen-Abtastpunkte und Tal-Abtastpunkte, und,
wenn das berechnete Ergebnis einer Funktion $C(tg_{di}, tg_{0i})$ gleich 1 ist, feststellen, dass das Sprachdatensegment die Hüllkurvenformcharakteristik 2 aufweist:

$$C(tg_{di}, tg_{oi}) = \begin{cases} \begin{cases} 1 & if\left(\dfrac{|\dfrac{tg_{oi}}{tg_{di}} - \dfrac{y_{po(\frac{i+1}{2})}}{y_{pd(\frac{i+1}{2})}}|}{\dfrac{tg_{oi}}{tg_{di}}} \leq c\right) \\ & \qquad\qquad\qquad\qquad \textit{falls i ungerade ist} \\ 0 & \textit{sonst} \end{cases} \\ \begin{cases} 1 & falls\left(\dfrac{|\dfrac{tg_{oi}}{tg_{di}} - \dfrac{y_{po(\frac{i}{2}+1)}}{y_{pd(\frac{i}{2}+1)}}|}{\dfrac{tg_{oi}}{tg_{di}}} \leq c\right) \\ & \qquad\qquad\qquad\qquad \textit{falls i gerade ist} \\ 0 & \textit{sonst} \end{cases} \end{cases}$$

wobei $c$ ein Fehlerschwellwert eines gültigen Tangenswertes ist;

$$\frac{tg_{oi}}{tg_{du}}$$ das erste Verhältnis darstellt;

$$\frac{y_{po_{\left(\frac{i+1}{2}\right)}}}{y_{p_{d\left(\frac{i+1}{2}\right)}}}$$ das zweite Verhältnis darstellt, wenn eine fortlaufende Nummer des Abtastpunkts gerade ist;

$$\frac{y_{po_{\left(\frac{i}{2}+1\right)}}}{y_{p_{d\left(\frac{i}{2}+1\right)}}}$$ das zweite Verhältnis darstellt, wenn eine fortlaufende Nummer des Abtastpunkts ungerade ist.

5. Verfahren nach Anspruch 4, wobei das Verfahren, vor dem Schritt, bei dem festgestellt wird, dass das Sprachdatensegment die Hüllkurvenformcharakteristik 2 aufweist, des Weiteren aufweist:
Berechnen, anhand des Berechnungsergebnisses für die Funktion $C(tg_{di}, tg_{0i})$, der folgenden Formel:

$$\frac{\sum_{i=1}^{2(n-1)} C(tg_{di}, tg_{oi})}{2(n-1)} \geq d \,,$$

wobei in dem Schritt, bei dem festgestellt wird, dass das Sprachdatensegment die Hüllkurvenformcharakteristik 2 aufweist, nur dann festgestellt wird, dass das Sprachdatensegment die Hüllkurvenformcharakteristik 2 aufweist, wenn die vorausgehende Formel erfüllt ist;
wobei $n$ eine Anzahl der Spitzen-Abtastpunkte oder der Tal-Abtastpunkte auf der Hüllkurve des Sprachdatensegments ist, und $d$ ein gültiger Schwellenwert bezüglich des Tangenswerts ist.

6. Verfahren nach einem der Ansprüche 1 bis 5, wobei der Schritt, bei dem ein Sprachdatensegment aus einem gedämpften Tonmuster aufgenommen wird, aufweist:

Feststellen von gültigen Audiodaten in dem gedämpften Tonmuster und Aufnehmen eines Sprachdatensegments aus den gültigen Audiodaten in dem gedämpften Tonmuster;
der Schritt, bei dem gültige Audiodaten in dem gedämpften Tonmuster festgestellt werden, aufweist:
wenn eine Anzahl von Abtastpunkten eines Audiodatensegments in dem gedämpften Tonmuster einen vorbestimmten Datengültigkeitsschwellwert $V_t$ erreicht, und eine Anzahl von fortlaufenden ungültigen Abtastpunkten in der Menge der Abtastpunkte kleiner ist, als ein vorbestimmter Datenungültigkeitsschwellwert $I_t$, Feststellen, dass das Audiodatensegment aus gültigen Audiodaten besteht, und wenn ein Absolutwert einer Amplitude des Abtastpunkts kleiner ist als ein vorbestimmter Amplitudenschwellwert $A_t$, Feststellen, dass der Abtastpunkt ein ungültiger Abtastpunkt ist.

7. Vorrichtung zur Identifizierung eines Markierungstons, aufweisend Ein Abtast- und Extraktionsmodul sowie ein Bewertungsverarbeitungsmodul, wobei:

das Abtast- und Extraktionsmodul konfiguriert ist, ein Sprachdatensegment aus einem gedämpften Tonmuster auszuwählen und für die Hüllkurve charakteristische Abtastpunkten aus der Menge aller Abtastpunkte des Sprachdatensegments zu extrahieren, wobei eine Anzahl von Abtastpunkten für das ausgewählte Sprachdatensegment gleich der Anzahl von Abtastpunkten des Markierungstonmusters ist, und die Menge der für die Hüllkurve charakteristischen Abtastpunkte sowohl Spitzen-Abtastpunkte als auch Tal-Abtastpunkte auf der Hüllkurve enthält;
das Bewertungsverarbeitungsmodul konfiguriert ist, zu erkennen, ob gemäß den von dem Abtast- und Extraktionsmodul extrahierten, für die Hüllkurve charakteristischen Abtastpunkten ein Abstand zwischen benachbarten, für die Hüllkurve charakteristischen Abtastpunkten des Sprachdatensegments gleich einem Abstand zwischen korrespondierenden benachbarten, für die Hüllkurve charakteristischen Abtastpunkten eines Markierungstons in einer Quelltonprobe ist, falls ja, festzustellen, dass das Sprachdatensegment dem Markierungston entspricht;

wobei die Quelltonprobe durch einen Sender gesendet und anschließend durch einen Empfänger als das gedämpfte Tonmuster empfangen wird;

wobei, wenn die Menge der für die Hüllkurve charakteristischen Abtastpunkte sowohl Spitzen-Abtastpunkte als auch Tal-Abtastpunkte auf der Hüllkurve enthält, die benachbarten für die Hüllkurve charakteristischen Abtastpunkte benachbarte Spitzen-Abtastpunkte auf der Hüllkurve sind, oder benachbarte Tal-Abtastpunkte auf der Hüllkurve, oder ein Spitzen-Abtastpunkt mit einem benachbarten Tal-Abtastpunkt auf der Hüllkurve, wobei der Abstand eine zeitliche Distanz zwischen dem benachbarten Spitzen-Abtastpunkten oder den benachbarten Tal-Abtastpunkten ist;

**dadurch gekennzeichnet, dass**

das Bewertungsverarbeitungsmodul des Weiteren konfiguriert ist, auf folgende Weise zu erkennen, ob der Abstand zwischen benachbarten, für die Hüllkurve charakteristischen Abtastpunkten in dem Sprachdatensegment gleich dem Abstand zwischen den korrespondierenden benachbarten, für die Hüllkurve charakteristischen Abtastpunkten des Markierungstons in dem Quelltonmuster ist:

Feststellen, dass der Abstand zwischen benachbarten, für die Hüllkurve charakteristischen Abtastpunkten in dem Sprachdatensegment gleich dem Abstand zwischen korrespondierenden benachbarten, für die Hüllkurve charakteristischen Abtastpunkten des Markierungstons in dem Quelltonmuster ist, falls das Sprachdatensegment irgendeine der folgenden Hüllkurvenformcharakteristika aufweist:

eine Hüllkurvenformcharakteristik 1, wobei der Abstand zwischen zwei benachbarten Spitzen-Abtastpunkten auf der Hüllkurve des Sprachdatensegments gleich dem Abstand zwischen zwei benachbarten Spitzen-Abtastpunkten auf der Hüllkurve des Markierungstons in dem Quelltonmuster ist; oder, der Abstand zwischen zwei benachbarten Tal-Abtastpunkten auf der Hüllkurve des Sprachdatensegments gleich dem Abstand zwischen den zwei benachbarten Tal-Abtastpunkten auf der Hüllkurve des Markierungstons in dem Quelltonmuster ist;

eine Hüllkurvenformcharakteristik 2, wobei ein Verhältnis eines Tangenswerts eines Winkels zwischen einer Linie, die einen korrespondierenden Spitzen-Abtastpunkt auf der Hüllkurve des Markierungstons des Quelltonmusters zu einem Koordinatenpunkt eines benachbarten Tal-Abtastpunkts auf einer x-Achse verbindet, und der x-Achse, zu einem Tangenswert eines Winkels zwischen einer Linie, die den Spitzen-Abtastwert auf der Hüllkurve des Sprachdatensegments zu einem Koordinatenpunkt eines benachbarten Tal-Abtastpunkts auf der x-Achse verbindet, und der x-Achse ein erstes Verhältnis ist, und ein Verhältnis einer Amplitude des korrespondierenden Spitzen-Abtastpunkts auf der Hüllkurve des Markierungstons in dem Quelltonmuster zu einer Amplitude des Spitzen-Abtastpunkts auf der Hüllkurve des Sprachdatensegments ein zweites Verhältnis ist, wobei das erste Verhältnis und das zweite Verhältnis gleich sind.

8. Vorrichtung gemäß Anspruch 7, wobei das Bewertungsverarbeitungsmodul des Weiteren konfiguriert ist, anhand der aus dem Sprachdatensegment extrahierten Spitzen-Abtastpunkte und Tal-Abtastpunkte die folgende Formel zu berechnen, und falls das berechnete Ergebnis einer Funktion $S(D_{DXI}, D_{0Xi})$ gleich 1 ist, festzustellen, dass das Sprachdatensegment die Hüllkurvenformcharakteristik 1 aufweist:

$$S(D_{DXi}, D_{OXi}) = \begin{cases} 1 & \text{falls} \left( \dfrac{|D_{DXi} - D_{OXi}|}{D_{OXi}} \le a \right) \\ 0 & \text{sonst} \end{cases}$$

wobei, $D_{DXI}$ einen Abstand zwischen zwei benachbarten Spitzen-Abtastpunkten oder zwei benachbarten Tal-Abtastpunkten auf der aus dem Sprachdatensegment extrahierten Hüllkurve repräsentiert;

$D_{0Xi}$ einen Abstand zwischen zwei benachbarten Spitzen-Abtastpunkten oder zwei benachbarten Tal-Abtastpunkten auf Hüllkurve des Markierungstons in dem Quelltonmuster repräsentiert;

$a$ einen Fehlerschwellwert bezüglich des Abstands zwischen zwei benachbarten Spitzen-Abtastpunkten oder zwei benachbarten Tal-Abtastpunkten repräsentiert.

9. Vorrichtung nach Anspruch 7, wobei das Bewertungsverarbeitungsmodul des Weiteren konfiguriert ist, die nachfolgenden Formel anhand der aus dem Sprachdatensegment extrahierten Spitzen-Abtastpunkte und Tal-Abtastpunkte zu berechnen, und, wenn das berechnete Ergebnis einer Funktion $C(tg_{di}, tg_{0i})$ gleich 1 ist, festzustellen, dass das Sprachdatensegment die Hüllkurvenformcharakteristik 2 aufweist:

$$C(tg_{di}, tg_{oi}) = \begin{cases} \begin{cases} 1 & if\left(\dfrac{\left|\dfrac{tg_{oi}}{tg_{di}} - \dfrac{y_{po(\frac{i+1}{2})}}{y_{pd(\frac{i+1}{2})}}\right|}{\dfrac{tg_{oi}}{tg_{di}}} \le c\right) \quad \textit{falls i ungerade ist} \\ 0 & \textit{sonst} \end{cases} \\ \\ \begin{cases} 1 & \textit{falls} \left(\dfrac{\left|\dfrac{tg_{oi}}{tg_{di}} - \dfrac{y_{po(\frac{i}{2}+1)}}{y_{pd(\frac{i}{2}+1)}}\right|}{\dfrac{tg_{oi}}{tg_{di}}} \le c\right) \quad \textit{falls i gerade ist} \\ 0 & \textit{sonst} \end{cases} \end{cases}$$

wobei *c* ein Fehlerschwellwert eines gültigen Tangenswertes ist;

$\dfrac{tg_{oi}}{tg_{du}}$ das erste Verhältnis darstellt;

$\dfrac{y_{po(\frac{i+1}{2})}}{y_{p_{d(\frac{i+1}{2})}}}$ das zweite Verhältnis darstellt, wenn eine fortlaufende Nummer des Abtastpunkts gerade ist;

$\dfrac{y_{po(\frac{i}{2}+1)}}{y_{p_{d(\frac{i}{2}+1)}}}$ das zweite Verhältnis darstellt, wenn eine fortlaufende Nummer des Abtastpunkts ungerade ist.

## Revendications

1. Procédé d'identification d'un son marqueur, comprenant :

l'enregistrement d'un segment de données de parole à partir d'un échantillon d'atténuation, dans lequel un nombre de points d'échantillonnage du segment de données de parole est égal à un nombre de points d'échantillonnage de l'échantillon de son marqueur, et l'extraction de points d'échantillonnage caractéristiques d'enveloppe à partir de tous les points d'échantillonnage du segment de données de parole (S401, S402) ;
s'il est déterminé qu'un espacement entre des points d'échantillonnage caractéristiques d'enveloppe voisins dans le segment de données de parole est égal à un espacement entre des points d'échantillonnage caractéristiques d'enveloppe voisins correspondants d'un son marqueur dans un échantillon de son source selon les points d'échantillonnage caractéristiques d'enveloppe extraits, le fait de déterminer que le segment de données de parole est le son marqueur (S403) ; dans lequel l'échantillon de son source est envoyé par un envoyeur puis reçu par un récepteur en tant que l'échantillon d'atténuation ; dans lequel, les points d'échantillonnage caractéristiques d'enveloppe comprennent des points d'échantillonnage crêtes et des points d'échantillonnage creux sur l'enveloppe, les points d'échantillonnage caractéristiques d'enveloppe voisins sont des points d'échantillonnage crêtes voisins sur l'enveloppe, ou des points d'échantillonnage creux voisins sur l'enveloppe, ou un point d'échantillonnage crête et un point d'échantillonnage creux voisins sur l'enveloppe ; dans lequel l'espacement est une distance temporelle entre les points d'échantillonnage crêtes voisins ou le point d'échantillonnage creux voisin ;

**caractérisé en ce qu'**il comprend en outre :

lorsque le segment de données de parole a l'une quelconque des caractéristiques de forme d'enveloppe suivantes, le fait de déterminer que l'espacement entre des points d'échantillonnage caractéristiques d'enveloppe voisins dans le segment de données de parole est égal à l'espacement entre des points d'échantillonnage caractéristiques d'enveloppe voisins correspondants du son marqueur dans l'échantillon de son source :

une caractéristique de forme d'enveloppe 1, dans lequel l'espacement entre deux points d'échantillonnage crêtes voisins sur l'enveloppe du segment de données de parole est égal à l'espacement entre deux points d'échantillonnage crêtes voisins sur l'enveloppe du son marqueur dans l'échantillon de son source ; ou, l'espacement entre deux points d'échantillonnage creux voisins sur l'enveloppe du segment de données de parole est égal à l'espacement entre les deux points d'échantillonnage creux voisins sur l'enveloppe du son marqueur dans l'échantillon de son source ;

une caractéristique de forme d'enveloppe 2, dans lequel un rapport, d'une valeur de tangente d'un angle entre une droite reliant un point d'échantillonnage crête correspondant sur l'enveloppe du son marqueur de l'échantillon de son source à un point de coordonnée sur l'axe x d'un point d'échantillonnage creux voisin et l'axe x, sur une valeur de tangente d'un angle entre une droite reliant le point d'échantillonnage crête sur l'enveloppe du segment de données de parole à un point de coordonnée sur l'axe x d'un point d'échantillonnage creux voisin et l'axe x, est un premier rapport, et un rapport d'une amplitude du point d'échantillonnage crête correspondant de l'enveloppe du son marqueur dans l'échantillon de son source sur une amplitude du point d'échantillonnage crête sur l'enveloppe du segment de données de parole est un second rapport, dans lequel le premier rapport et le second rapport sont égaux.

2. Procédé selon la revendication 1, comprenant en outre :

le calcul avec les points d'échantillonnage crêtes et les points d'échantillonnage creux extraits du segment de données de parole selon la formule suivante, lorsqu'un résultat de calcul d'une fonction $S(D_{DXi}, D_{OXi})$ vaut 1, le fait de déterminer que le segment de données de parole a la caractéristique de forme d'enveloppe 1 :

$$S(D_{DXi}, D_{OXi}) = \begin{cases} 1 & si\left(\dfrac{|D_{DXi} - D_{OXi}|}{D_{OXi}} \le a\right) \\ 0 & etc \end{cases}$$

dans lequel, $D_{DXi}$ représente un espacement entre deux points d'échantillonnage crêtes voisins ou deux points d'échantillonnage creux voisins sur l'enveloppe extraits du segment de données de parole ;

$D_{OXi}$ représente un espacement entre deux points d'échantillonnage crêtes voisins ou deux points d'échantillonnage creux voisins sur l'enveloppe du son marqueur dans l'échantillon de son source ;

a représente une valeur seuil d'erreur de l'espacement entre deux points d'échantillonnage crêtes voisins ou deux points d'échantillonnage creux voisins.

**3.** Procédé selon la revendication 2, dans lequel, avant l'étape consistant à déterminer que le segment de données de parole a la caractéristique d'enveloppe 1, le procédé comprend en outre : le calcul avec le résultat de calcul de la fonction $S(D_{DXi}, D_{OXi})$ selon la formule suivante :

$$\frac{\sum_{i=1}^{n-1} S(D_{DXi}, D_{OXi})}{n-1} \geq b$$

dans l'étape consistant à déterminer que le segment de données de parole a la caractéristique d'enveloppe 1, que le segment de données de parole a la caractéristique d'enveloppe 1 est déterminé uniquement lorsque la formule ci-dessus est satisfaite ;

dans lequel, $n$ est un nombre des points d'échantillonnage crêtes ou des points d'échantillonnage creux sur l'enveloppe du segment de données de parole, et $b$ est une valeur seuil valide de l'espacement entre deux points d'échantillonnage crêtes voisins ou deux points d'échantillonnage creux voisins.

**4.** Procédé selon la revendication 1, comprenant en outre :

le calcul avec les points d'échantillonnage crêtes et les points d'échantillonnage creux extraits du segment de données de parole selon la formule suivante, lorsqu'un résultat de calcul d'une fonction $C(tg_{di}, tg_{oi})$ vaut 1, le fait de déterminer que le segment de données de parole a la caractéristique de forme d'enveloppe 2 :

$$C(tg_{di}, tg_{oi}) = \begin{cases} \begin{cases} 1 & si\left(\dfrac{|\dfrac{tg_{oi}}{tg_{di}} - \dfrac{y_{po(\frac{i+1}{2})}}{y_{pd(\frac{i+1}{2})}}|}{\dfrac{tg_{oi}}{tg_{di}}} \leq c\right) \\ & \qquad\qquad\qquad\qquad si\ i\ est\ impair \\ 0 & etc \end{cases} \\ \\ \begin{cases} 1 & si\left(\dfrac{|\dfrac{tg_{oi}}{tg_{di}} - \dfrac{y_{po(\frac{i}{2}+1)}}{y_{pd(\frac{i}{2}+1)}}|}{\dfrac{tg_{oi}}{tg_{di}}} \leq c\right) \\ & \qquad\qquad\qquad\qquad si\ i\ est\ pair \\ 0 & etc \end{cases} \end{cases}$$

dans lequel, c est une valeur seuil d'erreur d'une valeur de tangente valide ;

$\dfrac{tg_{oi}}{tg_{du}}$ représente le premier rapport ;

$\dfrac{y_{po(\frac{i+1}{2})}}{y_{p_d(\frac{i+1}{2})}}$ représente le second rapport lorsqu'un numéro de série du point d'échantillonnage est pair ;

$\dfrac{y_{po(\frac{i}{2}+1)}}{y_{p_d(\frac{i}{2}+1)}}$ représente le second rapport lorsqu'un numéro de série du point d'échantillonnage est impair.

5. Procédé selon la revendication 4, dans lequel,
avant l'étape consistant à déterminer que le segment de données de parole a la caractéristique de forme d'enveloppe 2, le procédé comprend en outre : le calcul avec le résultat de calcul de la fonction $C(tg_{di}, tg_{oi})$ selon la formule suivante ;

$$\frac{\sum_{i=1}^{2(n-1)} C(tg_{di}, tg_{oi})}{2(n-1)} \geq d$$

dans l'étape consistant à déterminer que le segment de données de parole a la caractéristique de forme d'enveloppe 2, que le segment de données de parole a la caractéristique d'enveloppe 2 est déterminé uniquement lorsque la formule ci-dessus est satisfaite ;

dans lequel, n est le nombre de points d'échantillonnage crêtes ou de points d'échantillonnage creux sur l'enveloppe du segment de données de parole, et d est une valeur seuil valide de la valeur de tangente.

6. Procédé selon l'une quelconque des revendications 1 à 5, dans lequel,

l'étape d'enregistrement d'un segment de données de parole à partir d'un échantillon d'atténuation comprend : la détermination de données audio valides dans l'échantillon d'atténuation, et l'enregistrement d'un segment de données de parole des données audio valides dans l'échantillon d'atténuation ;

l'étape de détermination de données audio valides dans l'échantillon d'atténuation comprend :

lorsqu'un nombre de points d'échantillonnage d'un segment de données audio de l'échantillon d'atténuation atteint une valeur seuil de validité de données préétablie $V_t$, et qu'un nombre de points d'échantillonnage invalides continus dans les points d'échantillonnage est inférieur à une valeur seuil d'invalidation de données préétablie $I_t$, le fait de déterminer que le segment de données audio est des données audio valides, et lorsqu'une valeur absolue d'une amplitude du point d'échantillonnage est inférieure à une valeur seuil d'amplitude préétablie $A_t$, le fait de déterminer que le point d'échantillonnage est un point d'échantillonnage invalide.

7. Appareil d'identification d'un son marqueur, comprenant un module d'échantillonnage et d'extraction et un module de traitement de jugement, dans lequel :

le module d'échantillonnage et d'extraction est configuré pour échantillonner un segment de données de parole d'un échantillon d'atténuation, et extraire des points d'échantillonnage caractéristiques d'enveloppe à partir de tous les points d'échantillonnage du segment de données de parole, dans lequel, un nombre de points d'échantillonnage du segment de données de parole échantillonné est égal à un nombre de points d'échantillonnage d'un échantillon de son marqueur, les points d'échantillonnage caractéristiques d'enveloppe comprennent des points d'échantillonnage crêtes et des points d'échantillonnage creux sur l'enveloppe ;

le module de traitement de jugement est configuré pour juger si un espacement entre des points d'échantillonnage caractéristiques d'enveloppe voisins dans le segment de données de parole est égal à un espacement entre des points d'échantillonnage caractéristiques d'enveloppe voisins correspondants dans un son marqueur dans un échantillon de son source selon les points d'échantillonnage caractéristiques d'enveloppe extraits, qui sont extraits par le module d'échantillonnage et d'extraction, dans l'affirmative, déterminer que le segment de données de parole est le son marqueur ; dans lequel l'échantillon de son source est envoyé par un envoyeur puis reçu par un récepteur en tant que l'échantillon d'atténuation ; dans lequel les points d'échantillonnage caractéristiques d'enveloppe voisins sont des points d'échantillonnage crêtes voisins sur l'enveloppe ou des points d'échantillonnage creux voisins sur l'enveloppe, ou un point d'échantillonnage creux et un point d'échantillonnage crête voisins sur l'enveloppe ; l'espacement est une distance temporelle entre les points d'échantillonnage crêtes voisins ou le point d'échantillonnage creux voisin ;

**caractérisé en ce que**, le module de traitement de jugement est en outre configuré pour juger si l'espacement entre des points d'échantillonnage caractéristiques d'enveloppe voisins dans le segment de données de parole est égal à l'espacement entre les points d'échantillonnage caractéristiques d'enveloppe voisins correspondants du son marqueur dans l'échantillon de son source de la manière suivante :

le fait de déterminer que l'espacement entre des points d'échantillonnage caractéristiques d'enveloppe voisins dans le segment de données de parole est égal à l'espacement entre les points d'échantillonnage caractéristiques d'enveloppe voisins correspondants du son marqueur dans l'échantillon de son source lorsque le segment de données de parole a l'une quelconque des caractéristiques de forme d'enveloppe suivantes :

une caractéristique de forme d'enveloppe 1, dans lequel l'espacement entre deux points d'échantillonnage crêtes voisins sur l'enveloppe du segment de données de parole est égal à l'espacement entre deux points d'échantillonnage crêtes voisins sur l'enveloppe du son marqueur dans l'échantillon de son source ; ou, l'espacement entre deux points d'échantillonnage creux voisins sur l'enveloppe du segment de données de parole est égal à l'espacement entre les deux points d'échantillonnage creux voisins sur l'enveloppe du son marqueur dans l'échantillon de son source ;

une caractéristique de forme d'enveloppe 2, dans lequel un rapport, d'une valeur de tangente d'un angle entre une droite reliant un point d'échantillonnage crête correspondant sur l'enveloppe du son marqueur de l'échantillon de son source à un point de coordonnée sur l'axe x d'un point d'échantillonnage creux voisin et l'axe x, sur une valeur de tangente d'un angle entre une droite reliant le point d'échantillonnage crête sur l'enveloppe du segment de données de parole à un point de coordonnée sur l'axe x d'un point d'échantillonnage creux voisin et l'axe x est un premier rapport, et un rapport, d'une amplitude du point d'échantillonnage crête correspondant de l'enveloppe du son marqueur dans l'échantillon de son source sur une amplitude du point d'échantillonnage crête sur l'enveloppe du segment de données de parole, est un second rapport, dans lequel le premier rapport et le second rapport sont égaux.

8. Appareil selon la revendication 7, dans lequel,

le module de traitement de jugement est également configuré pour calculer avec les points d'échantillonnage crêtes et les points d'échantillonnage creux extraits du segment de données de parole selon la formule suivante, déterminer que le segment de données de parole a la caractéristique de forme d'enveloppe 1 lorsqu'un résultat de calcul d'une fonction $S(D_{DXi}, D_{OXi})$ vaut 1 :

$$S(D_{DXi}, D_{OXi}) = \begin{cases} 1 & si \left( \dfrac{|D_{DXi} - D_{OXi}|}{D_{OXi}} \leq a \right) \\ 0 & etc \end{cases}$$

dans lequel, $D_{Dxi}$ représente un espacement entre deux points d'échantillonnage crêtes voisins ou deux points d'échantillonnage creux voisins sur l'enveloppe extraits du segment de données de parole ;

$D_{OXi}$ représente un espacement entre deux points d'échantillonnage crêtes voisins ou deux points d'échantillonnage creux voisins sur l'enveloppe du son marqueur dans l'échantillon de son source ;

a représente une valeur seuil d'erreur de l'espacement entre deux points d'échantillonnage crêtes voisins ou deux points d'échantillonnage creux voisins.

9. Appareil selon la revendication 7, dans lequel, le module de traitement de jugement est également configuré pour calculer avec les points d'échantillonnage crêtes et les points d'échantillonnage creux extraits du segment de données de parole selon la formule suivante, déterminer que le segment de données de parole a la caractéristique de forme d'enveloppe 2 lorsqu'un résultat de calcul d'une fonction $C(tg_{di}, tg_{oi})$ vaut 1 :

$$C(tg_{di}, tg_{oi}) = \begin{cases} \begin{cases} 1 & si\ \left(\dfrac{\left|\dfrac{tg_{oi}}{tg_{di}} - \dfrac{y_{po(\frac{i+1}{2})}}{y_{pd(\frac{i+1}{2})}}\right|}{\dfrac{tg_{oi}}{tg_{di}}} \leq c\right) \\ \\ 0 & etc \end{cases} \quad si\ i\ est\ impair \\ \\ \begin{cases} 1 & si\ \left(\dfrac{\left|\dfrac{tg_{oi}}{tg_{di}} - \dfrac{y_{po(\frac{i}{2}+1)}}{y_{pd(\frac{i}{2}+1)}}\right|}{\dfrac{tg_{oi}}{tg_{di}}} \leq c\right) \\ \\ 0 & etc \end{cases} \quad si\ i\ est\ pair \end{cases}$$

dans lequel, c est une valeur seuil d'erreur d'une valeur de tangente valide ;

$\dfrac{tg_{oi}}{tg_{du}}$ représente le premier rapport ;

$\dfrac{y_{po(\frac{i+1}{2})}}{y_{p_d(\frac{i+1}{2})}}$ représente le second rapport lorsqu'un numéro de série du point d'échantillonnage est pair ;

$\dfrac{y_{po(\frac{i}{2}+1)}}{y_{p_d(\frac{i}{2}+1)}}$ représente le second rapport lorsqu'un numéro de série du point d'échantillonnage est impair.

FIG. 1

FIG. 2

301, A receiver sets an amplitude threshold $A_t$, a data invalidation threshold $I_t$ and a data validity threshold $V_t$

$\downarrow$

302, A sampling point counter is set as $C=0$, and a continuous invalid sampling point counter is set as $C_i=0$

$\downarrow$

303, the current sampling point is verified, $C$ is added by 1 at first, and then a judgment is executed

## FIG. 3

401, The sampling points in the sampling point set $S$ are analyzed and extracted one by one, if $y_{si} > y_{s(i-1)}$ and $y_{si} > y_{s(i+1)}$, then $s_i$ is the peak sampling point of the speech waveform, and $s_i$ is added into a set $P_w$

$\downarrow$

402, For the set $P_w = \{p_{w1}(x_{pw1}, y_{pw1}), p_{w2}(x_{pw2}, y_{pw2}) \ldots\ldots p_{wn}(x_{pwn}, y_{pwn})\}$, the sampling points in $P_w$ are re-extracted according to the way in step 401, and the extracted sampling points are stored into a set $P_E$, the set $P_E = \{p_{e1}(x_{pe1}, y_{pe1}), p_{e2}(x_{pe2}, y_{pe2}) \ldots\ldots P_{ek}(x_{pek}, y_{pek})\}$, and the $P_E$ is a set of peak sampling points on the envelope

$\downarrow$

403, The data in the set $P_w$ are analyzed again, if $y_{pwi} < y_{pw(i-1)}$ and $y_{pwi} < y_{pw(i+1)}$, then a sampling point $p_{wi}$ is added into a set $T_E$, here, the set $T_E = \{t_{e1}(x_{te1}, y_{te1}), t_{e2}(x_{te2}, y_{te2}) \ldots\ldots t_{e(k-1)}(x_{te(k-1)}, yt_{e(k-1)})\}$, and the $T_E$ is a set of trough sampling points on the envelope

## FIG. 4

501, A valid spacing count $N$ and a vernier count $i$ are set, $N$=0, $i$=1

502, The spacing of neighboring peak sampling points in the set of peak sampling points of the envelop of the extracted attenuation sample is calculated according to formula (11), the spacing of neighboring peak sampling points is the spacing $d_{di}$ between $p_{ei}$ and $p_{e(i+1)}$

503, Function $S(d_{di}, d_{oi})$ is calculated according to the above-mentioned formula (3), and a valid spacing count $N$ is calculated as $N = N + S(d_{di}, d_{oi})$

504, If $i \neq k\text{-}1$, $i$ is added by 1, step 502 is repeated

FIG. 5

601, A valid spacing count $N$ and
a vernier count $i$, $N=0$, $i=1$

602, A tangent value $tg_{d(2i-1)}$ of a trough sampling point $t_{ei}$ in the attenuation sample and its neighboring peak sampling point $p_{ei}$ with a sampling serial number being odd is calculated according to formula (13), and a tangent value $tg_{d(2i)}$ of $t_{ei}$ and its neighboring peak sampling point $p_{e(i+1)}$ with a sampling serial number being even is calculated according to formula (14)

603, $C(tg_{d(2i-1)},tg_{o(2i-1)})$ and $C(tg_{d(2i)},tg_{o(2i)})$
are calculated according
to above-mentioned formula (9),
and a valid
spacing count N is
calculated,
$N = N + C(tg_{d(2i-1)},tg_{o(2i-1)}) + C(tg_{d(2i)},tg_{o(2i)})$

604, If $i \neq k-1$, $i$ is added by 1, step 602 is repeated

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

•   EP 0644674 A2

### Non-patent literature cited in the description

•   **RIBBROCK A ; HUNTSVILLE et al.** A full-text retrieval approach to content-based audio identification. *PROCEEDINGS OF THE 2003 IEEE RADAR CONFERENCE,* 09 December 2002, 194-197